(19) Europäisches Patentamt
European Patent Office
Office européen des brevets

(11) **EP 1 762 961 B1**

(12) **EUROPEAN PATENT SPECIFICATION**

(45) Date of publication and mention
of the grant of the patent:
**30.11.2011 Bulletin 2011/48**

(51) Int Cl.:
**G06K 9/32** (2006.01) **G06T 7/00** (2006.01)
**G06K 19/06** (2006.01) **G06K 9/18** (2006.01)

(21) Application number: **06254562.9**

(22) Date of filing: **31.08.2006**

(54) **Grid orientation, scale, translation and modulation estimation**

Gitterausrichtung, Maßstab, Übersetzung und Modulationsschätzung

Echelle d'orientation de grille, translation et estimation de modulation

(84) Designated Contracting States:
**GB**

(30) Priority: **13.09.2005 AU 2005209703**

(43) Date of publication of application:
**14.03.2007 Bulletin 2007/11**

(73) Proprietor: **CANON KABUSHIKI KAISHA
Tokyo (JP)**

(72) Inventors:
• **Cheung, Eric Lap Min
Epping,
New South Wales 2121 (AU)**

• **Farrar, Stephen
Epping,
New South Wales 2121 (AU)**

(74) Representative: **TBK
Bavariaring 4-6
80336 München (DE)**

(56) References cited:
**WO-A1-03/038741 WO-A1-03/049023
CA-A1- 2 551 276 US-A1- 2002 044 138**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates generally to image processing, and particularly, to grid detection. The present invention also relates to a process and apparatus for determining the orientation (hereinafter "grid orientation"), spacing (hereinafter "grid spacing"), and translation (hereinafter "grid translation") of a grid, and to a computer program product including a computer readable medium having recorded thereon a computer program for determining the grid orientation, grid spacing, and grid translation for a grid.

A number of methods exist in the art for determining the grid orientation and grid spacing. Such methods are typically part of the process for aligning a two-dimensional barcode or watermark where data is stored in a grid-like configuration.

Prior art approaches typically use a convolution-based method, such as an autocorrelation or a periodogram to determine the grid orientation and grid spacing. Both an autocorrelation and a periodogram determine the dominant frequencies in input data, which show up as peaks in output data. These peaks can then be determined, and the location of a largest orientation of the grid can then be determined from the dominant frequency.

The major disadvantage of convolution-based methods is that they are computationally expensive, since they perform a convolution over the whole image.

Thus, a need clearly exists for an improved process for determining the grid orientation, grid spacing, and grid translation of a grid, which is less computationally expensive.

The above mentioned objects are achieved by an process for determining grid orientation, grid spacing, and grid translation of a grid according to claim 1, a apparatus for determining grid orientation, grid spacing, and grid translation of a grid according to claim 7 and a program according to claim 13.

Further advantageous features are defined in the dependent claims.

One or more embodiments of the present invention will now be described by way of example only, with reference to the drawings, in which:

Fig. 1 is a schematic block diagram of a general purpose computer upon which arrangements described can be practiced;
Fig. 2 shows an array of dots that have been phase modulated;
Fig. 3 shows a further array of dots arranged according to a regular grid;
Fig. 4 shows a still further array of dots that have been phase modulated;
Fig. 5 shows dot modulation positions for an intersection of the regular square grid of Fig. 4;
Fig. 6 shows the ordering for digits of a digital data store;
Fig. 7 shows a process for determining the grid orientation, grid spacing and grid translation of a grid of dots;
Fig. 8 shows a process for determining the grid orientation, grid spacing, grid translation and modulation quantum in a modulated grid of dots;
Fig. 9 shows a process for determining the grid orientation as executed in the process of Fig. 7;
Fig. 10 shows a process for determining the grid spacing of a grid as executed in the process of Fig. 7;
Fig. 11 shows a graph of a list of right neighbour difference vectors;
Fig. 12 shows a frequency histogram of x-values;
Fig. 13 shows a process for determining the grid translation of a grid as executed in the process of Fig. 7;
Fig. 14 shows dots arranged in a grid-like configuration, and a local window used in the estimation of grid translation for the grid;
Fig. 15 shows a process for determining the modulation quantum;
Fig. 16 shows a frequency histogram of y-values; and
Fig. 17 shows an alternative process for determining modulation quantum.

**Modulated grids**

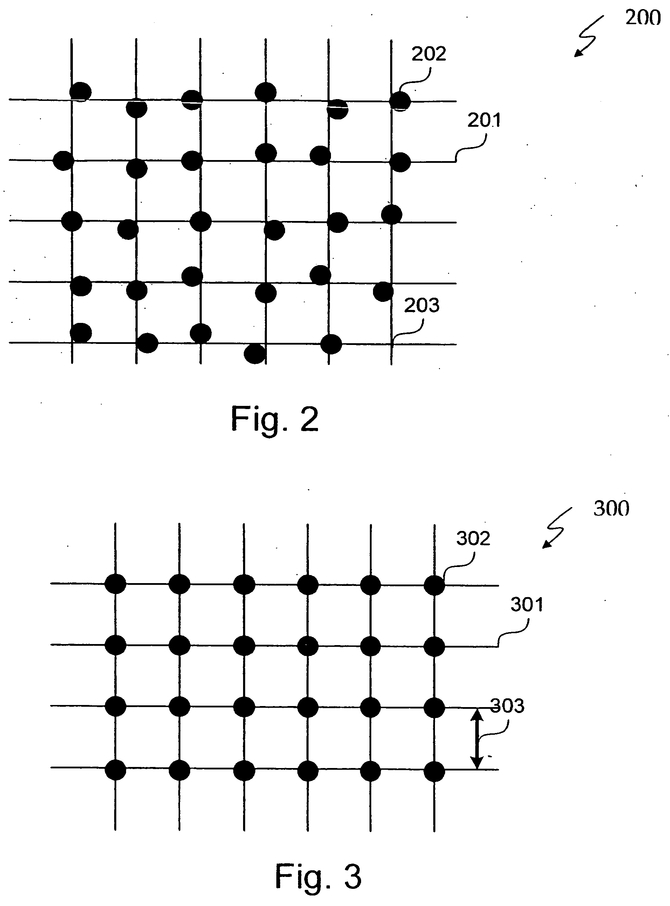

Fig. 2 shows an enlarged view of an array of dots (e.g., 202) that have been phase modulated to form a modulated grid of dots 200 (hereinafter "modulated grid" 200). The modulated grid 200 comprises a large number of dots 202 that lie close to intersection points (e.g., 203) of a square regular grid 201. In practice, only the dots 202 form the modulated grid 200, as seen in Fig. 2. The grid 201 and the lines thereof are virtual and are shown in Fig. 2 purely for explanation of the location of the dots 202.

The appearance of the modulated grid 200 is similar to that of dots (e.g., 302) arranged according to a regular square grid 301, as seen in Fig. 3, to form a regular grid of dots 300 (hereinafter "regular grid 300"). However, the modulated grid 200 and the regular grid 300 are not identical. Fig. 3 also shows the grid spacing 303 of the regular square grid 301.

The difference between the regular grid 300 and the modulated grid 200 is that the positions of the dots 202 in the modulated grid 200 are slightly modulated away from the grid positions that the dots 202 would occupy if the dots 202 were arranged according to intersection points 203 of the regular grid 201. This slight modulation serves two purposes. Firstly, the modulation makes the dots 202 of the modulated grid 200 slightly less visible than the dots 302 of the regular grid 300. This is because the human visual system is very adept at noticing regular grids. Secondly, a message in the form of digital data can be stored in a modulation of dots such as the modulation grid 200.

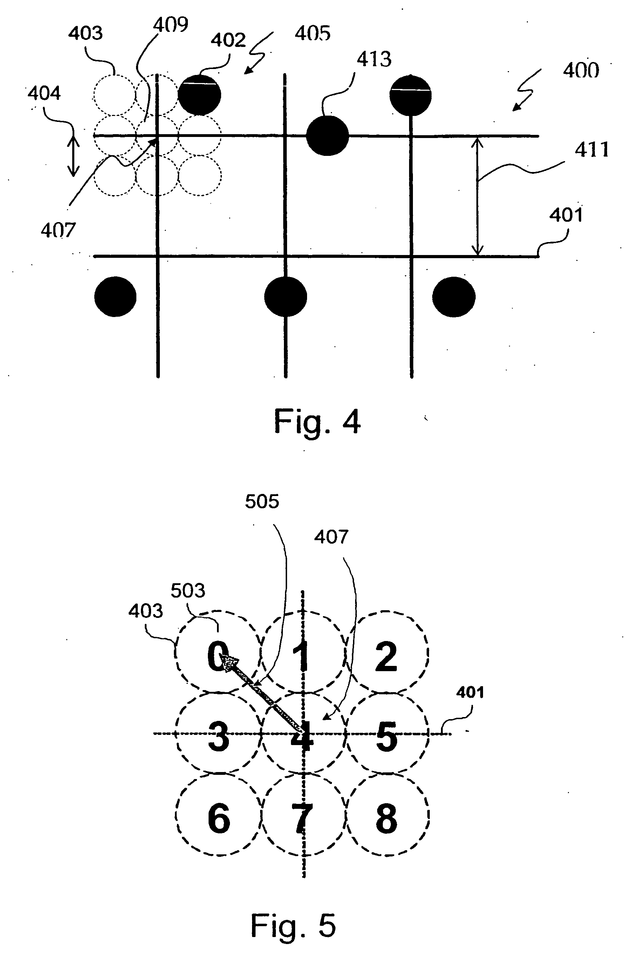

Fig. 4 shows a further array of dots (e.g., 402) that have been phase modulated to form a modulated grid 400. The dots 402 lie close to intersections (e.g., 407) of a regular square grid 401. Each dot 402 is modulated to one of nine possible positions (e.g., 403), as seen in Fig. 4. The nine possible positions for each dot are arranged in a three by three array (e.g., 405) centred on a relevant grid intersection 407. A central position 409 of the three by three array 405 is located at the grid intersection 407, and corresponds to a modulation of zero distance horizontally and zero distance vertically. Similarly, the other intersections of the regular square grid 401 have three by three arrays located about the intersections. The remaining eight modulation positions (e.g., 403) are offset from the grid intersection 407 horizontally, vertically or both horizontally and vertically. The horizontal and vertical distance by which the remaining modulation positions are offset is referred to as the 'modulation quantum' 404. The locations of the nine modulation positions 403, relative to the grid intersection 407, can be written as a list of (x, y) vectors where x indicates the horizontal direction and y indicates the vertical direction, and using the convention that rightward offsets are positive with respect to x and downward offsets are positive with respect to y. The vectors representing the locations of the nine modulation positions 403, relative to the grid intersection 407, can be written as follows where 'mq' represents the modulation quantum:

(-mq, -mq),
(0, -mq),
(+mq, -mq),
(-mq, +0),
(0, +0),
(+mq, +0),
(-mq, +mq),
(0, +mq), and
(+mq, +mq)

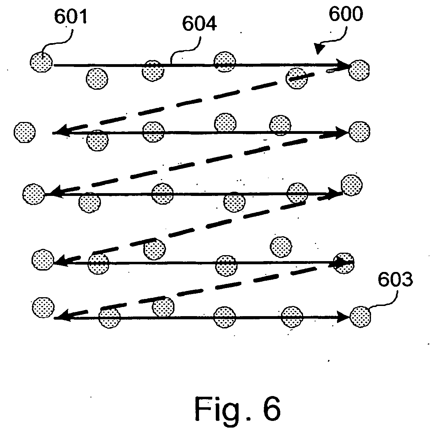

Fig. 5 shows the dot modulation positions (e.g., 403) for the regular square grid 401 in greater detail. The dot modulation positions 403 are centred on the grid intersections 407 of grid 401, and each modulation position, such as modulation position 403, has a digital code value (e.g., 503) associated with the modulation position 403. The nine modulation positions, including modulation position 403, allow each dot 402 to encode one of nine possible digital code values, including digital code value 503 for the modulation position 403. This allows the modulated grid 400 to act as a digital data store, with each dot 402 of the modulated grid 400 storing one base-nine digit of data. The preferred ordering of the digits of the digital data store is the ordering provided by using a rectangular array 600 of dots 601 as shown in Fig. 6. This ordering starts at a topmost, leftmost dot 601 and proceeds left to right and then from top to bottom, as represented by arrows (e.g., 604), until the bottommost, rightmost dot 603 is reached. Orderings of the digits of the digital data store other than that shown in Fig. 6 may also be used.

In some instances, upon being presented with a modulated grid that contains some data, it is useful to determine the grid orientation, grid spacing, and modulation quantum for the modulated grid. The determination of the grid orientation, grid spacing and modulation quantum may be achieved by utilizing the fact that, in a modulated grid, such as the modulation grid 400, the average spacing between the dots 402 will equal the grid spacing 411. However, the spacing between the dots 402 is not always equal to the grid spacing 411. Likewise, the average direction between adjacent dots, such as the dot 402 and the dot 413, is aligned with lines of the regular square grid 401. However, the direction between adjacent dots (402 and 403) is not always aligned with the lines of the grid 401.

Additionally, for a given dot (e.g., 402), it is useful to estimate where its corresponding underlying grid-point is located. This problem is referred to as finding the grid translation. The grid-point location for a dot is represented by the coordinates of the intersection point nearest the dot. For example, the grid-point location of the dot 402 is the coordinates of the intersection point 407.

In many applications, the modulated grid (e.g., 400) may undergo modification between the time that the modulated grid 400 is created, and the time when parameters (e.g., grid spacing, grid orientation) associated with the modulated grid 400 is determined. For example, the modulated grid 400 may be printed, and scanned, and undergo dot detection. During such a modification some extra dots may be introduced, or some dots may disappear, and some dots may move. Estimation of the grid parameters should .be reliable even when such modifications have taken place.

**Determining grid parameters**

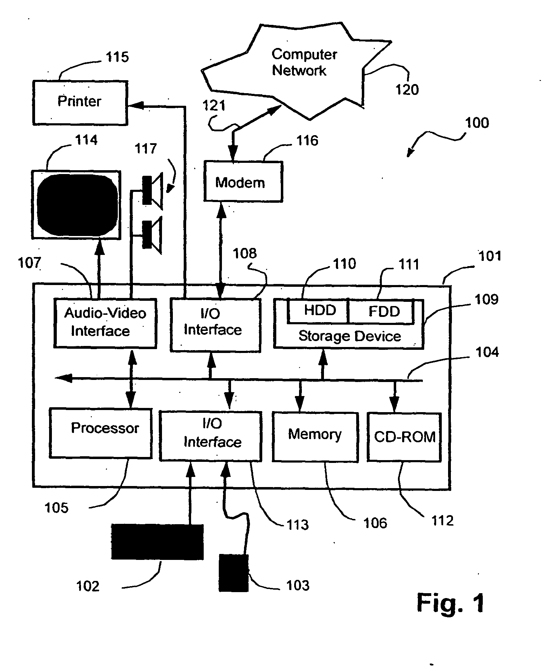

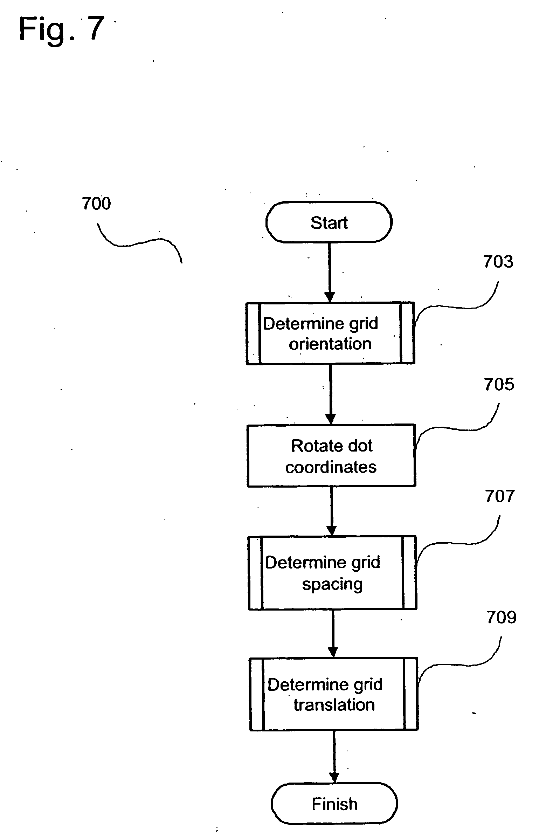

A process 700 for determining the grid orientation, grid spacing and grid translation of a grid of dots, will now be described with reference to Figs. 7 to 17. The process 700 may be practiced using a general-purpose computer system 100, such as that shown in Fig. 1 wherein the processes of Figs. 7 to 17 may be implemented as software, such as an application program executing within the computer system 100. In particular, the steps of process 700 are effected by instructions in the software that are carried out by the computer. The instructions may be formed as one or more code modules, each for performing one or more particular tasks. The software may also be divided into two separate parts, in which a first part performs the described processes and a second part manages a user interface between the first part and the user. The software may be stored in a computer readable medium, including the storage devices described below, for example. The software is loaded into the computer from the computer readable medium, and then executed by the computer. A computer readable medium having such software or computer program recorded on it is a computer program product. The use of the computer program product in the computer preferably effects an advantageous apparatus for implementing the process 700.

The computer system 100 is formed by a computer module 101, input devices such as a keyboard 102 and mouse 103, output devices including a printer 115, a display device 114 and loudspeakers 117. A Modulator-Demodulator (Modem) transceiver device 116 is used by the computer module 101 for communicating to and from a communications network 120, for example connectable via a telephone line 121 or other functional medium. The modem 116 can be used to obtain access to the Internet, and other network systems, such as a Local Area Network (LAN) or a Wide Area Network (WAN), and may be incorporated into the computer module 101 in some implementations.

The computer module 101 typically includes at least one processor unit 105, and a memory unit 106, for example formed from semiconductor random access memory (RAM) and read only memory (ROM). The module 101 also includes an number of input/output (I/O) interfaces including an audio-video interface 107 that couples to the video display 114 and loudspeakers 117, an I/O interface 113 for the keyboard 102 and mouse 103 and optionally a joystick (not illustrated), and an interface 108 for the modem 116 and printer 115. In some implementations, the modem 1116 may be incorporated within the computer module 101, for example within the interface 108. A storage device 109 is provided and typically includes a hard disk drive 110 and a floppy disk drive 111. A magnetic tape drive (not illustrated) may also be used. A CD-ROM drive 112 is typically provided as a non-volatile source of data. The components 105 to 113 of the computer module 101, typically communicate via an interconnected bus 104 and in a manner which results in a conventional mode of operation of the computer system 100 known to those in the relevant art. Examples of computers on which the described arrangements can be practised include IBM-PC's and compatibles, Sun Sparcstations or alike computer systems evolved therefrom.

Typically, the application program is resident on the hard disk drive 110 and read and controlled in its execution by the processor 105. Intermediate storage of the program and any data fetched from the network 120 may be accomplished using the semiconductor memory 106, possibly in concert with the hard disk drive 110. In some instances, the application program may be supplied to the user encoded on a CD-ROM or floppy disk and read via the corresponding drive 112 or 111, or alternatively may be read by the user from the network 120 via the modem device 116. Still further, the software can also be loaded into the computer system 100 from other computer readable media. The term "computer readable medium" as used herein refers to any storage or transmission medium that participates in providing instructions and/or data to the computer system 100 for execution and/or processing. Examples of storage media include floppy disks, magnetic tape, CD-ROM, a hard disk drive, a ROM or integrated circuit, a magneto-optical disk, or a computer readable card such as a PCMCIA card and the like, whether or not such devices are internal or external of the computer module 101. Examples of transmission media include radio or infra-red transmission channels as well as a network connection to another computer or networked device, and the Internet or Intranets including e-mail transmissions and information recorded on Websites and the like.

The process 700 may alternatively be implemented in dedicated hardware such as one or more integrated circuits performing the functions or sub functions of the processes of Fig. 7 to 17. Such dedicated hardware may include graphic processors, digital signal processors, or one or more microprocessors and associated memories.

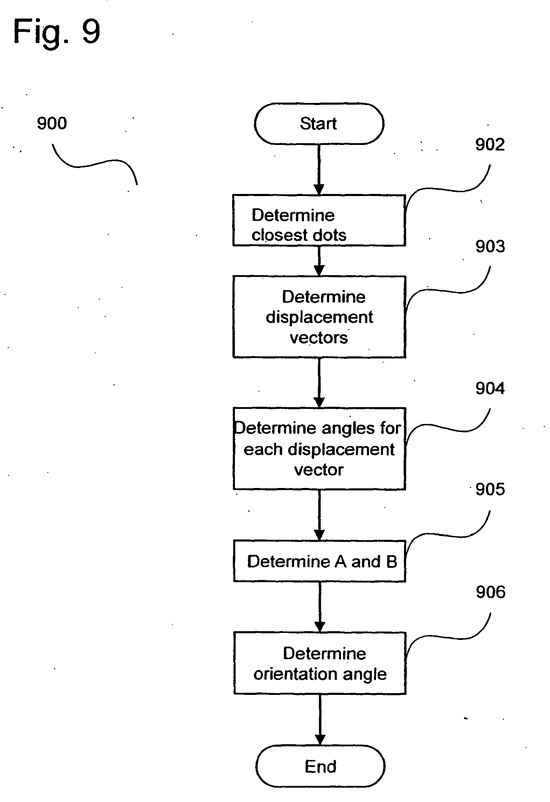

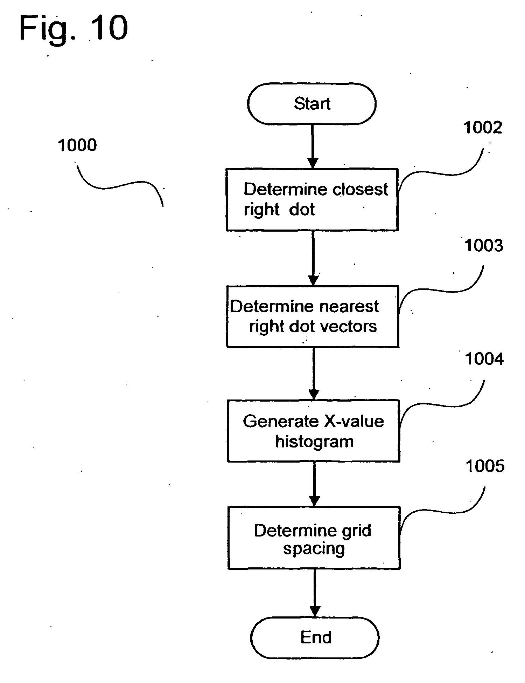

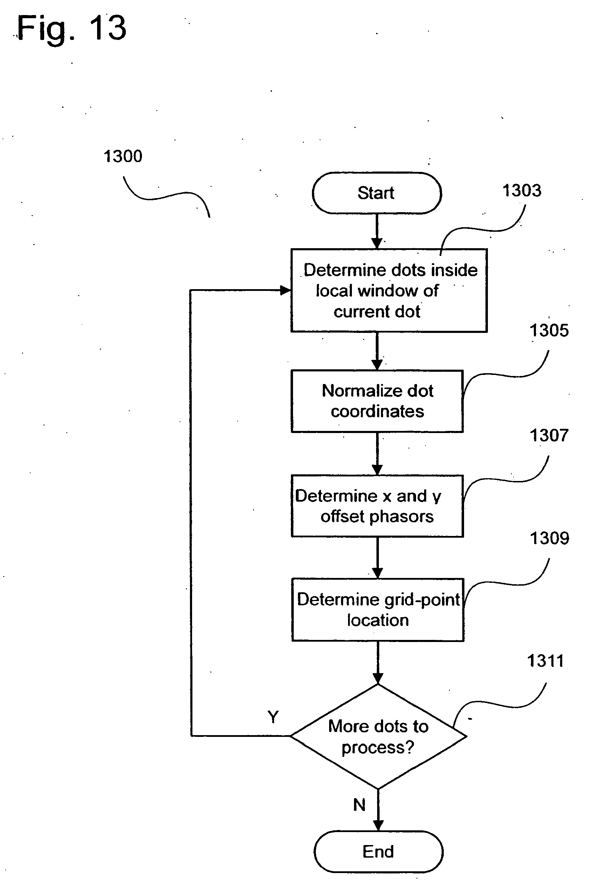

Inputs to the process 700 are the dot coordinates of dots of the grid, which may be stored in memory 106. The process 700 begins at step 703, where the processor 105 determines an angle representing the grid orientation of the grid. The grid orientation is determined from the dot coordinates of the dots of the grid stored in memory 106. A process 900 for determining the grid orientation for a grid, as executed at step 703, will be described in detail below with reference to Fig. 9. The determined grid orientation may be stored in memory 106. Once the grid orientation has been determined, at the next step 705, the processor 105 applies a rotation to all the dot coordinates of the grid. The rotation rotates the dot coordinates by the grid orientation angle, so that the rotated dot coordinates have grid axes aligned with the x- and y-axes. Given the rotated dot coordinates, at a following step 707, the processor 105 determines the grid spacing of the grid, which may be stored in memory 106. A process 1000 for detecting the grid spacing of the grid, as executed at step 707, will be described in detail below with reference to Fig. 10. At a following step 709, the processor 105 uses the grid spacing and rotated dot coordinates to determine the grid translation which may be stored in memory 106. A process 1300 for determining the grid translation will be described in detail below with reference to Fig. 13. The process concludes following step 709.

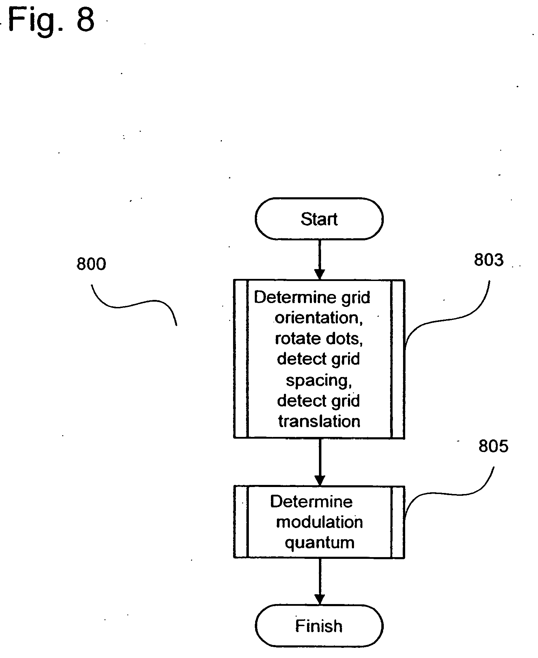

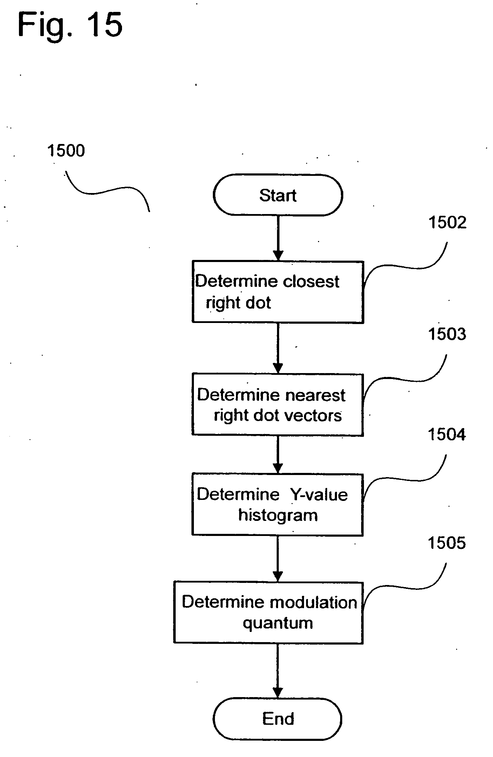

Fig. 8 shows a process 800 for determining the grid orientation, grid spacing, grid translation and modulation quantum of a modulated grid. The inputs to the process 800 are the coordinates of the dots on a modulated grid, which may be stored in memory 106. At a following step 803, the processor 105 determines the grid orientation, grid spacing and grid translation by executing the process 700.- Then at a following step 805, the processor 105 determines the modulation quantum. A process 1500 for determining the modulation quantum, as executed at step 805, will be described in detail below with reference to Fig. 15. The determined modulation quantum may be stored in memory 106.

**Determining the grid orientation**

The process 900 for determining the grid orientation, as executed at step 703 of process 700, will now be described in greater detail, with reference to Fig. 9. The process 900 determines the grid orientation of the dots of the grid.

The process 900 begins at a first step 902, where the processor 105 determines, for each dot of the grid, what other dot is closest to the dot. Step 902 is executed for every dot in the grid. Any known method for determining the closest dot to a given dot may be used at step 902. For example, one process for determining the closest dot to a given dot is to select each other dot in turn, determine the distance from the selected dot to each other dot, and then select the other dot where the determined distance was least. The preferred process for determining the closest dot to a given dot is a faster process where the entire grid space is divided into many 'buckets'. Each dot is assigned to a bucket that covers the location of the given dot. To determine the closest dot to a given dot, the processor 105 starts at the bucket that covers the given dot, looks at all the dots in each bucket surrounding the given dot, and selects a dot closest to the given dot. If no dots exist in any of the surrounding buckets, the processor 105 continues to a next nearest set of buckets radially outwards, and the process continues in the same manner. This preferred process for determining the closest dot to a given dot greatly reduces the number of candidate dots considered for the closest dot.

At a following step 903, the processor 105 determines the displacement vectors from each dot to a closest other dot, which was found in step 902. Thus every dot of the grid has a corresponding displacement vector determined for the dot.

At a following step 904, the processor 105 determines, for each displacement vector determined in step 903, the angle of that displacement vector. The angle $\theta$ of a vector may be determined as follows:

$$\theta = \texttt{atan2(y, x)}$$

where x and y are the horizontal and vertical components of a vector.

The process 900 continues at a following step 905, where the processor 105 determines values of variables A and B, defined as follows:

$$A = \sum_i \cos(4\theta_i)$$

$$B = \sum_i \sin(4\theta_i)$$

where the $\theta_i$ are the angles of the displacement vectors determined in step 904. The sums are taken over all displacement vectors.

A following step 906 of the process 900 then determines a grid orientation angle $\varphi$, representing the grid orientation, using the formula:

$$\varphi = \texttt{atan2(B, A)}$$

The process 900 concludes following step 906.

**Determining the grid spacing**

The process 1000 for determining the grid spacing of a grid as executed in step 707 of the process 700, will now be described in detail with reference to Fig. 10. The process 1000 begins at a first step 1002, where the processor 105 takes as input the dots of the grid. For each dot (x, y) of the grid, a nearest neighbouring dot to the right of the dot (x, y) on the same horizontal row is determined and stored in memory 106. The following heuristic may be used to execute step 1002. Every dot (a, b) that is not (x, y) is considered, and if (a, b) is outside a ninety (90) degree sector to the right of the dot (x, y), the dot (a, b) is rejected. Formally, if

$$a - x \leq 0 \quad \text{or} \quad |a - x| \leq |b - y|$$

dot (a, b) is rejected. For the dots that are left, the dot that minimizes the function

$$d(a, b) = |a - x| + 2|b - y|$$

is determined. This dot is taken to be the dot to the right of (x, y) and stored in a list of right neighbour dots configured within memory 106.

At a following step 1003, the processor 105 takes each of the right neighbour dots (a, b) stored in memory 106 at step 1002 and determines a difference vector (dx, dy) from (x, y), as follows:

$$(dx, dy) = (a, b) - (x, y)$$

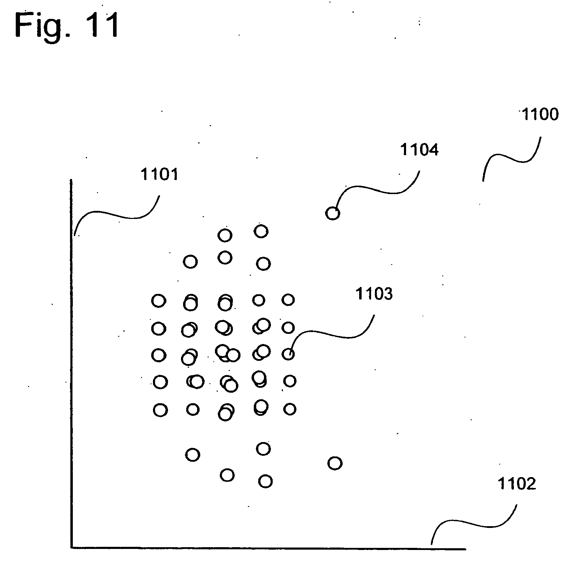

where (dx, dy) is stored in a list of difference vectors configured within memory 106. As an example, Fig. 11 shows a graph 1100 of a list of difference vectors. The graph 1100 comprises a y-axis 1101 and an x-axis 1102. Circles (e.g., 1103) of the graph 1100 represent a terminal point of a difference vector. Due to noise and distortion in the grid, there will be some misplaced outlying terminal points, such as the terminal point 1104.

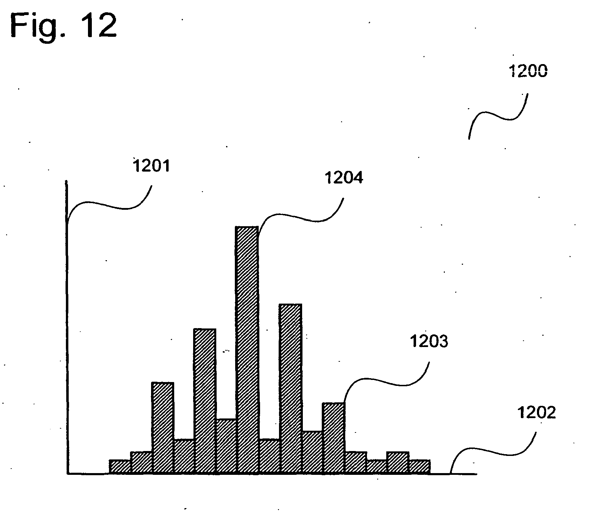

The process 1000 continues at a following step 1004, where the processor 105 takes the x-ordinate of each difference vector determined at step 1003 and generates a frequency histogram of the values of the x-ordinates. Fig. 12 shows an example of a histogram 1200. The axis 1201 is a frequency axis and the axis 1202 is the x-ordinate axis. The frequency histogram 1200 also comprises frequency bars (e.g., 1203). The size of each quantum in the x-ordinate axis 1202 is related to granularity of the dot coordinates. The quantum is preferably selected to be 0.5 of the grid co-ordinate axis system. However, any suitable value may be used for the quantum.

The process 1000 continues at a following step 1005, where the processor 105 uses the histogram 1200 to determine the grid spacing. Note that most of the right neighbours dots will be clustered around the spacing of the grid. Therefore, the grid spacing is determined by taking the x-value of the most frequent x-ordinate, which in the example of Fig. 12 is shown as the frequency bar 1204.

**Determining the grid translation**

The process 1300 for determining the grid translation of a grid, as executed at step 709 of the process 700, will now be described in further detail with reference to Fig. 13. The list of dot coordinates and the grid spacing, stored in memory 106, is provided as input to the process 1300. The process 1300 determines the grid translation for every dot of the grid. That is, for every dot, the process 1300 estimates the grid-point location of the dot.

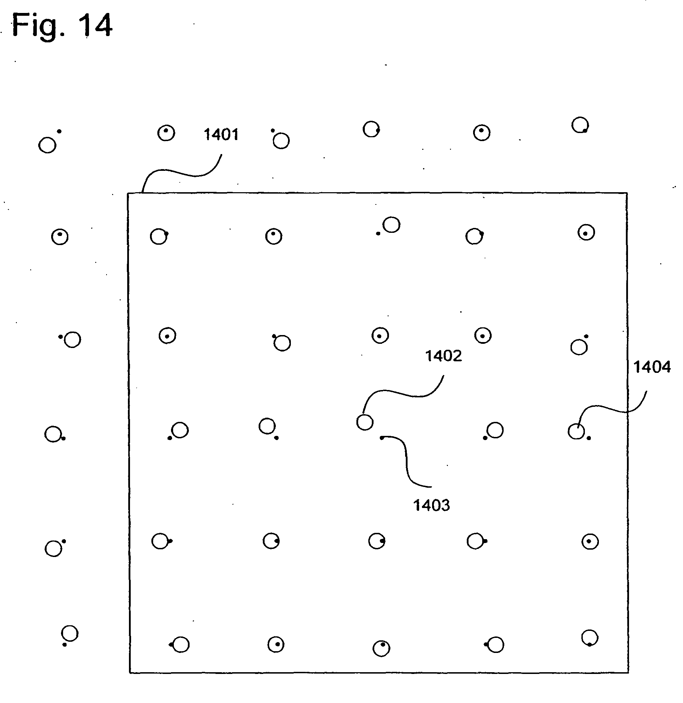

The process begins at step 1303, where the processor 105 selects a dot that has not been processed yet from the list of dots stored in memory 106 for the grid. This selected dot is called the 'current dot'. The processor 105 determines every dot that is within a local window of the current dot and places the dot into a list of local window dots configured within memory 106. For example, Fig. 14 shows dots arranged in a grid-like configuration 1400 in a noisy environment. The grid 1400 comprises the current dot 1402 and is the grid-point location 1403 of the current dot 1402. A local window 1401 of the current dot 1402 is also shown. The local window 1401 has a side length of five (5) in the example of Fig. 14. The size of the local window 1401 depends on type and severity of noise present-in the grid environment. The preferred size of the local window is thirty (30).

At a following step 1305, the processor 105 takes the list of local window dots (e.g., 1404) from memory 106 and normalises the coordinates of each dot $(x_k, y_k)$ so that the grid spacing becomes 2n, as follows:

$$\left(xNew_k, yNew_k\right) = \left(\frac{2x_k\pi}{gridSpacing}, \frac{2y_k\pi}{gridSpacing}\right)$$

The process 1300 continues at a following step 1307, where the processor 105 takes the list of normalised local window dots stored in memory 106 and determines two phasors, xOffset and yOffset:

$$xOffset = \sum_k \cos\left(xNew_k\right) + j\sin\left(xNew_k\right)$$

$$yOffset = \sum_k \cos\left(yNew_k\right) + j\sin\left(yNew_k\right)$$

The summation at step 1307 is taken over the list of normalised local window dots. The phase of xOffset and yOffset estimates the amount that the current dot is out of phase with its grid-point in the x and y direction, respectively.

At a following step 1309, the processor 105 determines the location of the grid-point of the current dot. Denote the current dot by $(x_c, y_c)$. The grid-point (xGrid, yGrid) for the current dot is given by

$$xOffset_2 = xOffset\left(\cos\left(\frac{-2x_c\pi}{gridSpacing}\right) + j\sin\left(\frac{-2y_c\pi}{gridSpacing}\right)\right)$$

$$yOffset_2 = yOffset\left(\cos\left(\frac{-2x_c\pi}{gridSpacing}\right) + j\sin\left(\frac{-2y_c\pi}{gridSpacing}\right)\right)$$

$$xGrid = \frac{\angle\left(xOffset_2\right) \times gridSpacing}{2\pi} + x_c$$

$$yGrid = \frac{\angle\left(yOffset_2\right) \times gridSpacing}{2\pi} + y_c$$

The process 1300 continues at a following step 1311, where if the processor 105 determines that there are dots which have not had their grid-point determined yet, then the process 1300 returns to step 1303. Otherwise, the process 1300 concludes.

**Determining the modulation quantum**

The process 1500 for determining the modulation quantum, as executed at step 805, will now be described in detail with reference to Fig. 15. The process 1500 begins at a first step 1502, where the processor 105 takes as input the dots of the grid. For each dot (x, y) of the grid, a nearest neighbouring dot to the right of the dot (x, y) on the same horizontal row is determined and stored in memory 106, as described above for step 1002. At a following step 1503, the processor 105 takes each of the right neighbour dots (a, b) stored in memory 106 at step 1002 and determines a difference vector (dx, dy) from (x, y)-, as described above for step 1003.

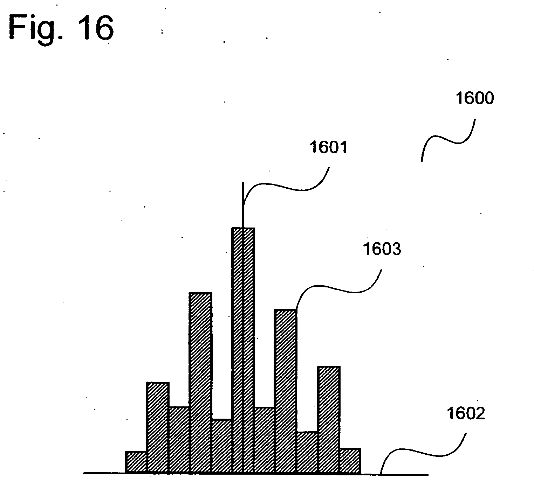

At a following step 1504, the processor 105 determines a frequency histogram of the y-values of each difference vector determined in step 1503. As an example, Fig. 16 shows a histogram 1600. The histogram comprises a frequency axis 1601, a y-ordinate axis 1602, and frequency bars (e.g., 1603). The size of each quantum in the y-ordinate axis is related to the granularity of the dot coordinates. Again, the quantum is preferably selected to be 0.5 of the grid co-ordinate axis system. However, any suitable value may be used for the quantum.

At a following step 1505, the processor 105 uses the histogram 1600 to determine the modulation quantum of the grid. At step 1505, the processor 105 determines the peaks in the histogram 1600 near zero. A peak is defined to be a y-value having an associated frequency bar which is greater than all the frequency bars of neighbouring y-values within a given radius referred to as the "peak-window-radius". The peak-window-radius is proportional to the grid spacing. In described processes, the peak-window-radius is preferably one tenth of the grid spacing. An example of such a peak is 1603 is shown in Fig. 16, where the peak-window-radius is one (1). Once several peaks (e.g., -five peaks) are determined around the origin 1601, the modulation quantum is determined by taking the average of the distance between adjacent peaks. The process 1500 concludes follows step 1505.

**Alternative method for determining modulation quantum**

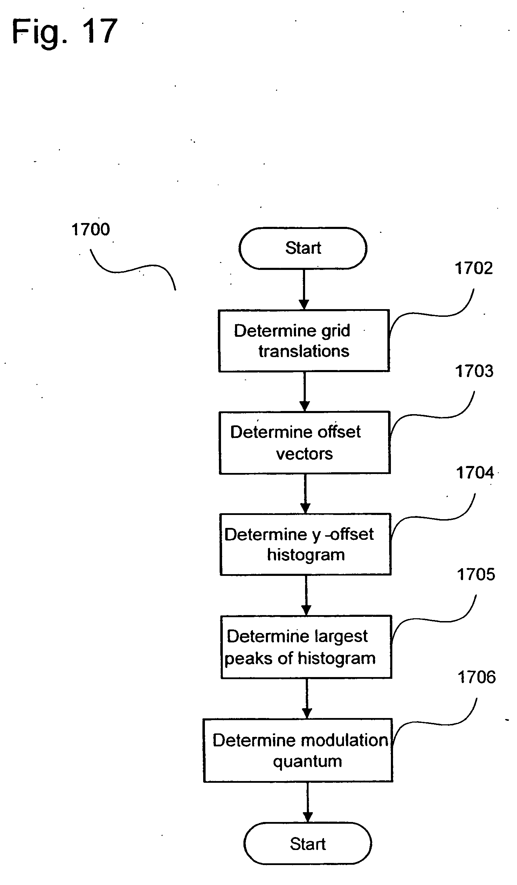

An alternative process 1700 for determining the modulation quantum, as at step 805 of the method 800, is shown in Fig. 17. The process 1700 begins at step 1702, where the processor 105 estimates, for every dot in the list of dots configured within memory 106, the closest grid point. That is, the processor 105 determines the grid translations for the dots of the grid. The closest grid point is determined for each dot at step 1702 using the process 1300 of Fig. 13 as described above

At a following step 1703, the processor 105 determines the offset vector from each dot to the corresponding grid-point for the dot as determined in step 1702. Then at the next step 1704, the processor 105 determines a histogram of the y-components of the offset vectors determined in step 1703, as described above. At a following step 1705, the processor 105 determines the three largest peaks of the histogram determined at step 1704. The distance between a smallest of these peaks and the second smallest of these peaks, and the distance between the second smallest of these peaks and the largest of these peaks is approximately equal the modulation quantum for the grid. At step 1706, the processor 105 detects the average of these two distances, which is used as the modulation quantum.

**Alternative Arrangements**

In Fig. 9, in step 902 the process 900 determines, for each dot, the closest other dot. In an alternative arrangement, the closest other dots may be determined only for a subset of the dots of the grid. In this instance, the subset of the dots for which closest other dots are determined may be, for instance, a random selection of the dots. Alternatively, the closest other dots may be determined only for the dots that lie in a top 25% of the grid or only those dots that lie in a predetermined band of the grid. In this instance, in subsequent steps 903 and 904 of the process 900, only the dots that are in the subset are considered.

In an additional alternative arrangement, instead of using only the closest dot the closest N dots may be used to determine the displacement vectors. For example, N may be equal to two (2) or four (4). This arrangement can sometimes result in more accurate grid orientation detection in very noisy grids, at the cost of complexity and speed.

In Fig. 9, at step 906, the process 900 determines the grid orientation angle $\varphi$ from the displacement vector angles determined in previous step 905. Those skilled in the relevant art would appreciate that many alternative methods may be used at step 906. For example, a histogram of the displacement vector angles may be determined. In this instance, the histogram bin containing the largest number of displacement vector angles corresponds to the grid orientation angle $\varphi$.

In Fig. 10, at step 1003 a set of difference vectors is determined, and every difference vector is used in subsequent steps 1004 and 1005. In an alternative arrangement, a random subset of the difference vectors may be used in steps 1004 and 1005, and a value for the grid spacing determined based on this random subset. In this instance, the process of steps 1004 and 1005 is then repeated N times (e.g., thirty (30) times), each time with a different random subset of the difference vectors. This results in N+1 different grid spacing values. The real grid spacing may then be determined to be the mode of these N+1 values. This alternative arrangement may sometimes result in more accurate grid spacing detection in very noisy grids, at the cost of complexity and speed.

Similarly, a random subset of the difference vectors may be used in steps 1503 and 1504, of the process 1500, for more accurate modulation quantum detection, at the cost of complexity and speed.

In Fig. 10, at steps 1004 and 1005, the grid spacing is determined from the x-ordinates of the difference vectors found in step 1003. Those skilled in the relevant art would appreciate that many alternative processes may be used to determine the grid spacing. For example, the grid spacing may be determined as the average of the x-ordinates of the difference vectors determined in step 1003.

**Industrial Applicability**

It is apparent from the above that the arrangements described are applicable to the computer and data processing industries.

The foregoing describes only some embodiments of the present invention, and modifications and/or changes can be made thereto without departing from the scope of the invention, the embodiments being illustrative and not restrictive.

**Claims**

1. A process for determining grid orientation, grid spacing, and grid translation for data encoded in a modulated grid of dots, the process comprising the steps of:

   inputting dot coordinates of the dots;
   determining (703) a grid orientation angle representing the grid orientation of the modulated grid from the dot coordinates by:

   determining (903) displacement vectors from at least one dot of the dots to a closest other dot of the dots, and
   determining (904-906) the grid orientation angle from angles of the displacement vectors;

   rotating (705) the dot coordinates by the grid orientation angle;
   determining (707) the grid spacing from the rotated dot coordinates by:

   determining (1002, 1003) difference vectors from at least one dot of the dots to a closest other dot of the dots, and
   determining (1004, 1005) the grid spacing from values of an x-ordinate of the difference vectors; and

   determining (709) the grid translation for each of the dots using the rotated dot coordinates and the grid spacing, **characterized in that** the grid translation is determined by:

   for each of the dots, determining (1303) every dot that is within a local window of the current dot,
   normalizing (1305) the coordinates of each dot $(x_k, y_k)$ within the local window to $(xNew_k, yNew_k)$ so that the grid spacing becomes $2\pi$, and
   estimating (1307) an amount that the current dot is out of phase with a grid-point corresponding to the current dot by:

   determining x and y offset phasors, (xOffset,yOffset), for the current dot as a sum of x and y phasors of each dot in the local window using the normalized coordinates, respectively, wherein the x and y phasors are calculated as $\cos(xNeW_k)+j\sin(xNew_k)$ and $\cos(yNew_k)+j\sin(yNew_k)$, respectively,
   determining an x offset phasor, $xOffset_2$, for the current dot as a product of said x offset phasor, xOffset, and the conjugate of the x phasor of the normalized current dot,
   determining an y offset phasor, $yOffset_2$, for the current dot as the product of said y offset phasor, yOffset, and the conjugate of the y phasor of the normalized current dot, and
   determining (1309) a location for the grid-point, (xGrid, yGrid),corresponding to the current dot $(x_c, y_c)$ using the x and y offset phasors, $(xOffset_2, yOffset_2)$.

2. The process according to claim 1, wherein

$$xOffset_2 = xOffset\left(\cos\left(\frac{-2x_c\pi}{grid\,spacing}\right) + j\sin\left(\frac{-2y_c\pi}{grid\,spacing}\right)\right)$$

$$yOffset_2 = yOffset\left(\cos\left(\frac{-2x_c\pi}{grid\,spacing}\right) + j\sin\left(\frac{-2y_c\pi}{grid\,spacing}\right)\right)$$

and wherein $x_c$ and $y_c$, are the rotated coordinates of the current dot.

3. The process according to claim 1, wherein the step of determining (904-906) the grid orientation angle from the displacement vectors comprises:

determining (905) values of variables A and B as

$$A = \sum_i \cos(4\theta_i)$$

$$B = \sum_i \sin(4\theta_i)$$

wherein $\theta_i$ are the angles of the displacement vectors and the sums are taken over all the displacement vectors; and
determining (906) the grid orientation angle as

$$\varphi = \tfrac{1}{4}\,atan2(B,A).$$

4. The process according to claim 1, wherein the step of determining (904-906) the grid orientation angle from the displacement vectors comprises:

determining a histogram of the displacement vector angles; and
determining a histogram bin containing the largest number of displacement vector angles as the grid orientation angle.

5. The process according to claim 1, wherein the step of determining (707) the grid spacing from the rotated dot coordinates comprises:

generating (1004) a histogram of the x-ordinate of each difference vector; and
determining (1005) an x-value of the most frequent x-ordinate as the grid spacing.

6. The process according to claim 1, wherein the step of determining (707) the grid spacing from the rotated dot coordinates comprises:

determining the grid spacing as an average of the x-ordinates of the difference vectors.

7. An apparatus for determining grid orientation, grid spacing, and grid translation for data encoded in a modulated grid of dots, the apparatus comprising:

input means for inputting dot coordinates of the dots;
grid orientation angle determining means (105) for determining (703) a grid orientation angle representing the grid orientation of the modulated grid from the dot coordinates by:

determining (903) displacement vectors from at least one dot of the dots to a closest other dot of the dots, and
determining (904-906) the grid orientation angle from angles of the displacement vectors;

rotating means (105) for rotating (705) the dot coordinates by the grid orientation angle;
grid spacing determining means (105) for determining (707) the grid spacing from the rotated dot coordinates by:

determining (1002, 1003) difference vectors from at least one dot of the dots to a closest other dot of the dots, and
determining (1004, 1005) the grid spacing from values of an x-ordinate of the difference vectors; and

grid translation determining means (105) for determining (709) the grid translation for each of the dots using the rotated dot coordinates and the grid spacing by:

for each of the dots, determining (1303) every dot that is within a local window of the current dot,
normalizing (1305) the coordinates of each dot $(x_k, y_k)$ within the local window to $(xNew_k, yNew_k)$ so that the grid spacing becomes $2\pi$, and,
estimating (1307) an amount that the current dot is out of phase with a grid-point corresponding to the current dot by:

determining x and y offset phasors, (xOffset,yOffset), for the current dot as a sum of x and y phasors of each dot in the local window using the normalized coordinates, respectively, wherein the x and y phasors are calculated as $\cos(xNew_k)+j\sin(xNew_k)$ and $\cos(yNew_k)+j\sin(yNew_k)$, respectively,
determining an x offset phasor, $xOffset_2$, for the current dot as a product of said x offset phasor, xOffset, and the conjugate of the x phasor of the normalized current dot,
determining an y offset phasor, $yOffset_2$, for the current dot as the product of said y offset phasor, yOffset, and the conjugate of the y phasor of the normalized current dot, and
determining (1309) a location for the grid-point, (xGrid, yGrid), corresponding to the current dot $(x_c, y_c)$ using the x and y offset phasors, $(xOffset_2, yOffset_2)$.

8. The apparatus according to claim 7, wherein

$$xOffset_2 = xOffset\left(\cos\left(\frac{-2x_c\pi}{grid\,spacing}\right)+j\sin\left(\frac{-2y_c\pi}{grid\,spacing}\right)\right)$$

$$yOffset_2 = yOffset\left(\cos\left(\frac{-2x_c\pi}{grid\,spacing}\right)+j\sin\left(\frac{-2y_c\pi}{grid\,spacing}\right)\right)$$

and wherein $x_c$ and $y_c$ are the rotated coordinates of the current dot.

9. The apparatus according to claim 7, wherein the grid orientation angle determining means for determining (904-906) the grid orientation angle from the displacement vectors is configured to:

determine (905) values of variables A and B as

$$A = \sum_i \cos(4\theta_i)$$

$$B = \sum_i \sin(4\theta_i)$$

wherein $\theta_i$ are the angles of the displacement vectors and the sums are taken over all the displacement vectors; and

determine (906) the grid orientation angle as

$$\varphi = ¼ \; atan2(B,A).$$

10. The apparatus according to claim 7, wherein the grid orientation angle determining means for determining (904-906) the grid orientation angle from the displacement vectors is configured to:

determine a histogram of the displacement vector angles; and
determine a histogram bin containing the largest number of displacement vector angles as the grid orientation angle.

11. The apparatus according to claim 7, wherein the grid spacing determining means for determining (707) the grid spacing from the rotated dot coordinates is configured to:

generate (1004) a histogram of the x-ordinate of each difference vector; and
determine (1005) an x-value of the most frequent x-ordinate as the grid spacing.

12. The apparatus according to claim 7, wherein the grid spacing determining means for determining (707) the grid spacing from the rotated dot coordinates is configured to:

determine the grid spacing as an average of the x-ordinates of the difference vectors.

13. A computer program product including a program for a processing device, comprising software code portions for performing the steps of any one of claims 1 to 6 when the program is run on the processing device.

14. The computer program product according to claim 13, wherein the computer program product comprises a computer-readable medium on which the software code portions are stored.

**Patentansprüche**

1. Verfahren zur Bestimmung einer Rasterorientierung, eines Rasterpunktabstands und einer Rastertranslation für in einem modulierten Raster von Punkten kodierte Daten, wobei das Verfahren die Schritte umfasst:

Eingeben von Punktkoordinaten der Punkte,
Bestimmen (703) eines Rasterorientierungswinkels, der die Rasterorientierung des modulierten Rasters darstellt, aus den Punktkoordinaten durch:

Bestimmen (903) von Verschiebungsvektoren von zumindest einem Punkt der Punkte zu einem am nächsten liegenden anderen Punkt der Punkte und
Bestimmen (904-906) des Rasterorientierungswinkels aus Winkeln der Verschiebungsvektoren,

Rotieren (703) der Punktkoordinaten mit dem Rasterorientierungswinkel,
Bestimmen (707) des Rasterpunktabstands aus den rotierten Punktkoordinaten durch:

Bestimmen (1002, 1003) von Differenzvektoren von zumindest einem Punkt der Punkte zu einem am nächsten liegenden anderen Punkt der Punkte und
Bestimmen (1004, 1005) des Rasterpunktabstands aus Werten einer x-Ordinate der Differenzvektoren und

Bestimmen (709) der Rastertranslation für jeden der Punkte unter Verwendung der rotierten Punktkoordinaten und des Rasterpunktabstands,
**dadurch gekennzeichnet, dass** die Rastertranslation bestimmt wird durch:

Bestimmen (1303) für jeden der Punkte jeden Punkt, der innerhalb eines lokalen Fensters des aktuellen Punkts liegt,
Normalisieren (1305) der Koordinaten jedes Punkts ($x_k$, $y_k$) innerhalb des lokalen Fensters zu ($xNew_k$,

yNew$_k$), so dass der Rasterpunktabstand 2n wird, und
Schätzen (1307) eines Ausmaßes, mit dem der aktuelle Punkt aus der Phase zu einem Rasterpunkt ist, der dem aktuellen Punkt entspricht, durch:

Bestimmen von x- und y-Offsetzeigern (xOffset, yOffset) für den aktuellen Punkt als Summe von x- und y-Zeigern jedes Punkts in dem lokalen Fenster jeweils unter Verwendung der normalisierten Koordinaten, wobei die x- und y-Zeiger jeweils als cos(xNew$_k$)+jsin(xNew$_k$) und cos(yNew$_k$)+jsin(yNew$_k$) berechnet werden,
Bestimmen eines x-Offsetzeigers xOffset$_2$ für den aktuellen Punkt als Produkt des x-Offsetzeigers xOffset und der konjugiert komplexen Zahl des x-Zeigers des normalisierten aktuellen Punkts,
Bestimmen eines y-Offsetzeigers yOffset$_2$ für den aktuellen Punkt als Produkt des y-Offsetzeigers yOffset und der konjugiert komplexen Zahl des y-Zeigers des normalisierten aktuellen Punkts und
Bestimmen (1309) eines Orts für den Rasterpunkt (xGrid, yGrid), der dem aktuellen Punkt (x$_c$, y$_c$) entspricht, unter Verwendung der x- und y-Offsetzeiger (xOffset$_2$, yOffset$_2$).

2. Verfahren nach Anspruch 1, wobei

$$\text{xOffset}_2 = \text{xOffset}\left(\cos\left(\frac{-2x_c\pi}{Rasterpunktabstnd}\right) + j\sin\left(\frac{-2y_c\pi}{Rasterpunktabstnd}\right)\right)$$

$$\text{yOffset}_2 = \text{yOffset}\left(\cos\left(\frac{-2x_c\pi}{Rasterpunktabstnd}\right) + j\sin\left(\frac{-2y_c\pi}{Rasterpunktabstnd}\right)\right)$$

und wobei x$_c$ und y$_c$ die rotierten Koordinaten des aktuellen Punkts sind.

3. Verfahren nach Anspruch 1, wobei der Schritt des Bestimmens (904-906) des Rasterorientierungswinkels aus den Verschiebungsvektoren umfasst:

Bestimmen (905) von Werten von Variablen A und B zu

$$A = \sum_i \cos(4\theta_i)$$

$$B = \sum_i \sin(4\theta_i)$$

wobei $\theta_i$ die Winkel der Verschiebungsvektoren sind und die Summen über alle Verschiebungsvektoren genommen werden, und
Bestimmen (906) des Rasterorientierungswinkels zu

$$\varphi = \tfrac{1}{4}\,\text{atan2}(B,A).$$

4. Verfahren nach Anspruch 1, wobei der Schritt des Bestimmens (904-906) des Rasterorientierungswinkels aus den Verschiebungsvektoren umfasst:

Bestimmen eines Histogramms der Verschiebungsvektorwinkel und
Bestimmen eines Histogrammplatzes mit der größten Anzahl von Verschiebungsvektorwinkeln als den Rasterorientierungswinkel.

**5.** Verfahren nach Anspruch 1, wobei der Schritt des Bestimmens (707) des Rasterpunktabstands aus den rotierten Punktkoordinaten umfasst:

Erzeugen (1004) eines Histogramms der x-Ordinate jedes Differenzvektors und
Bestimmen (1005) eines x-Werts der häufigsten x-Ordinate als den Rasterpunktabstand.

**6.** Verfahren nach Anspruch 1, wobei der Schritt des Bestimmens (707) des Rasterpunktabstands aus den rotierten Punktkoordinaten umfasst:

Bestimmen des Rasterpunktabstands als Mittelwert der x-Ordinaten der Differenzvektoren.

**7.** Vorrichtung zur Bestimmung einer Rasterorientierung, eines Rasterpunktabstands und einer Rastertranslation für in einem modulierten Raster von Punkten kodierte Daten, wobei die Vorrichtung umfasst:

eine Eingabeeinrichtung zum Eingeben von Punktkoordinaten der Punkte,
eine Rasterorientierungswinkelbestimmungseinrichtung (105) zum Bestimmen (703) eines Rasterorientierungswinkels, der die Rasterorientierung des modulierten Rasters darstellt, aus den Punktkoordinaten durch:

Bestimmen (903) von Verschiebungsvektoren von zumindest einem Punkt der Punkte zu einem am nächsten liegenden anderen Punkt der Punkte und
Bestimmen (904-906) des Rasterorientierungswinkels aus Winkeln der Verschiebungsvektoren,

eine Rotationseinrichtung (105) zum Rotieren (703) der Punktkoordinaten mit dem Rasterorientierungswinkel,
eine Rasterpunktabstandbestimmungseinrichtung (105) zum Bestimmen (707) des Rasterpunktabstands aus den rotierten Punktkoordinaten durch:

Bestimmen (1002, 1003) von Differenzvektoren von zumindest einem Punkt der Punkte zu einem am nächsten liegenden anderen Punkt der Punkte und
Bestimmen (1004, 1005) des Rasterpunktabstands aus Werten einer x-Ordinate der Differenzvektoren und

einer Rastertranslationsbestimmungseinrichtung (105) zum Bestimmen (709) der Rastertranslation für jeden der Punkte unter Verwendung der rotierten Punktkoordinaten und des Rasterpunktabstands durch:

Bestimmen (1303) für jeden der Punkte jeden Punkt, der innerhalb eines lokalen Fensters des aktuellen Punkts liegt,
Normalisieren (1305) der Koordinaten jedes Punkts $(x_k, y_k)$ innerhalb des lokalen Fensters zu $(xNew_k, yNew_k)$, so dass der Rasterpunktabstand $2n$ wird, und
Schätzen (1307) eines Ausmaßes, mit dem der aktuelle Punkt aus der Phase zu einem Rasterpunkt ist, der dem aktuellen Punkt entspricht, durch:

Bestimmen von x- und y-Offsetzeigern (xOffset, yOffset) für den aktuellen Punkt als Summe von x- und y-Zeigern jedes Punkts in dem lokalen Fenster jeweils unter Verwendung der normalisierten Koordinaten, wobei die x- und y-Zeiger jeweils als $\cos(xNew_k)+j\sin(xNew_k)$ und $\cos(yNew_k)+j\sin(yNew_k)$ berechnet werden,
Bestimmen eines x-Offsetzeigers $xOffset_2$ für den aktuellen Punkt als Produkt des x-Offsetzeigers xOffset und der konjugiert komplexen Zahl des x-Zeigers des normalisierten aktuellen Punkts,
Bestimmen eines y-Offsetzeigers $yOffset_2$ für den aktuellen Punkt als Produkt des y-Offsetzeigers yOffset und der konjugiert komplexen Zahl des y-Zeigers des normalisierten aktuellen Punkts und
Bestimmen (1309) eines Orts für den Rasterpunkt (xGrid, yGrid), der dem aktuellen Punkt $(x_c, y_c)$ entspricht, unter Verwendung der x- und y-Offsetzeiger $(xOffset_2, yOffset_2)$.

**8.** Vorrichtung nach Anspruch 7, wobei

$$xOffset_2 = xOffset\left(\cos\left(\frac{-2x_c\pi}{Rasterpunktabstnd}\right) + j\sin\left(\frac{-2y_c\pi}{Rasterpunktabstnd}\right)\right)$$

$$yOffset_2 = yOffset\left(\cos\left(\frac{-2x_c\pi}{Rasterpunktabstnd}\right) + j\sin\left(\frac{-2y_c\pi}{Rasterpunktabstnd}\right)\right)$$

und wobei $X_c$ und $Y_c$ die rotierten Koordinaten des aktuellen Punkts sind.

**9.** Vorrichtung nach Anspruch 7, wobei die Rasterorientierungswinkelbestimmungseinrichtung zum Bestimmen (904-906) des Rasterorientierungswinkels aus den Verschiebungsvektoren eingerichtet ist zum:

Bestimmen (905) von Werten von Variablen A und B zu

$$A = \sum_i \cos(4\theta_i)$$

$$B = \sum_i \sin(4\theta_i)$$

wobei $\theta_i$ die Winkel der Verschiebungsvektoren sind und die Summen über alle Verschiebungsvektoren genommen werden, und
Bestimmen (906) des Rasterorientierungswinkels zu

$$\varphi = ¼\ atan2(B,A).$$

**10.** Vorrichtung nach Anspruch 7, wobei die Rasterorientierungswinkelbestimmungseinrichtung zum Bestimmen (904-906) des Rasterorientierungswinkels aus den Verschiebungsvektoren eingerichtet ist zum:

Bestimmen eines Histogramms der Verschiebungsvektorwinkel und
Bestimmen eines Histogrammplatzes mit der größten Anzahl von Verschiebungsvektorwinkeln als den Rasterorientierungswinkel.

**11.** Vorrichtung nach Anspruch 7, wobei die Rasterpunktabstandbestimmungseinrichtung zum Bestimmen (707) des Rasterpunktabstands aus den rotierten Punktkoordinaten eingerichtet ist zum:

Erzeugen (1004) eines Histogramms der x-Ordinate jedes Differenzvektors und
Bestimmen (1005) eines x-Werts der häufigsten x-Ordinate als den Rasterpunktabstand.

**12.** Vorrichtung nach Anspruch 7, wobei die Rasterpunktabstandbestimmungseinrichtung zum Bestimmen (707) des Rasterpunktabstands aus den rotierten Punktkoordinaten umfasst:

Bestimmen des Rasterpunktabstands als Mittelwert der x-Ordinaten der Differenzvektoren.

**13.** Computerprogrammprodukt mit einem Programm für eine Verarbeitungseinrichtung, das Softwarecodeabschnitte zur Durchführung der Schritte nach einem der Ansprüche 1 bis 6, wenn das Programm auf der Verarbeitungseinrichtung läuft, umfasst.

**14.** Computerprogrammprodukt nach Anspruch 13, wobei das Computerprogrammprodukt ein computerlesbares Medium umfasst, auf dem die Softwarecodeabschnitte gespeichert sind.

**Revendications**

**1.** Procédé de détermination de l'orientation d'une grille, de l'espacement d'une grille et de la translation d'une grille pour des données codées dans une grille modulée de points, le procédé comprenant les étapes consistant à :

fournir en entrée des coordonnées de points desdits points ;

déterminer (703) un angle d'orientation de grille représentant l'orientation de grille de la grille modulée à partir des coordonnées de points en :

déterminant (903) des vecteurs de déplacement d'au moins un point parmi les points à un autre point le plus proche parmi les points, et

en déterminant (904-906) l'angle d'orientation de grille à partir d'angles des vecteurs de déplacement ;

en soumettant les coordonnées des points à une rotation (705) de l'angle d'orientation de grille ;

en déterminant (707) l'espacement de grille à partir des coordonnées de points soumises à la rotation en :

déterminant (1002, 1003) des vecteurs de différence d'au moins un point parmi les points à un autre point le plus proche parmi les points, et

en déterminant (1004, 1005) l'espacement de grille à partir de valeurs d'une ordonnée x des vecteurs de différence ; et

en déterminant (709) la translation de grille pour chacun des points en utilisant les coordonnées de points soumises à la rotation et l'espacement de grille,

**caractérisé en ce que** la translation de grille est déterminée :

pour chacun des points, en déterminant (1303) chaque point qui se trouve à l'intérieur d'une fenêtre locale du point courant,

en normalisant (1305) les coordonnées de chaque point $(x_k, y_k)$ à l'intérieur de la fenêtre locale à $(xNew_k, yNew_k)$ afin que l'espacement de grille devienne égal à $2\pi$, et

en estimant (1307) un degré de déphasage du point courant par rapport à un point de grille correspondant au point courant en :

déterminant des phaseurs de décalage x et y (xOffset, yoffset) pour le point courant sous la forme d'une somme de phaseurs x et y de chaque point dans la fenêtre locale en utilisant respectivement les coordonnées normalisées, les phaseurs x et y étant respectivement calculés sous la forme $\cos(xNew_k) + j\sin(xNew_k)$ et $\cos(yNew_k) + j\sin(yNew_k)$,

en déterminant un phaseur de décalage x, $xOffset_2$, pour le point courant sous la forme d'un produit dudit phaseur de décalage x, xOffset, et le conjugué du phaseur x du point courant normalisé,

en déterminant un phaseur de décalage y, $yOffset_2$, pour le point courant sous la forme du produit dudit phaseur de décalage y, yoffset, et du conjugué du phaseur y du point courant normalisé, et

en déterminant (1309) une position pour le point de grille, (xGrid, yGrid), correspondant au point courant $(x_c, y_c)$ en utilisant les phaseurs de décalage x et y $(xOffset_2, yOffset_2)$.

**2.** Procédé selon la revendication 1, dans lequel :

$$xOffset_2 = xOffset\left(\cos\left(\frac{-2x_c\pi}{espacement\,de\,grille}\right) + j\sin\left(\frac{-2y_c\pi}{espacement\,de\,grille}\right)\right)$$

$$yOffset_2 = yOffset\left(\cos\left(\frac{-2x_c\pi}{espacement\,de\,grille}\right) + j\sin\left(\frac{-2y_c\pi}{espacement\,de\,grille}\right)\right)$$

et dans lequel $x_c$ et $y_c$ sont les coordonnées soumises à rotation du point courant.

**3.** Procédé selon las revendication 1, dans lequel l'étape consistant à déterminer (904-906) l'angle d'orientation de grille à partir des vecteurs de déplacement consiste à :

déterminer (905) des valeurs de variables A et B sous la forme :

$$A = \sum_i \cos(4\theta_i)$$

$$B = \sum_i \sin(4\theta_i)$$

où $\theta_i$ sont les angles des vecteurs de déplacement et les sommes sont prises sur la totalité des vecteurs de déplacement ; et
déterminer (906) l'angle d'orientation de grille sous la forme suivante :

$$\varphi = 1/4 \ \text{atan2}(B,A).$$

4. Procédé selon la revendication 1, dans lequel l'étape consistant à déterminer (904-906) l'angle d'orientation de grille à partir des vecteurs de déplacement consiste à :

déterminer un histogramme des angles des vecteurs de déplacement ; et
déterminer une classe d'histogramme contenant le plus grand nombre d'angles de vecteurs de déplacement en tant qu'angle d'orientation de grille.

5. Procédé selon la revendication 1, dans lequel l'étape consistant à déterminer (707) l'espacement de grille à partir des coordonnées de points soumises à rotation consiste à :

générer (1004) un histogramme de l'ordonnée x de chaque vecteur de différence ; et
déterminer (1005) une valeur x de l'ordonnée x la plus fréquente en tant qu'espacement de grille.

6. Procédé selon la revendication 1, dans lequel l'étape consistant à déterminer (707) l'espacement de grille à partir des coordonnées de points soumises à rotation consiste à :

déterminer l'espacement de grille sous la forme d'une moyenne des ordonnées x des vecteurs de différence.

7. Appareil destiné à déterminer une orientation de grille, un espacement de grille et une translation de grille pour des données codées dans une grille modulée de points, l'appareil comprenant :

un moyen d'entrée destiné à fournir en entrée des coordonnées de points des points ;
un moyen de détermination d'angle d'orientation de grille (105) destiné à déterminer (703) un angle d'orientation de grille représentant l'orientation de grille de la grille modulée à partir des coordonnées de points en :

déterminant (903) des vecteurs de déplacement d'au moins un point parmi les points à un autre point le plus proche parmi les points, et
en déterminant (904-906) l'angle d'orientation de grille à partir d'angles des vecteurs de déplacement ;
un moyen de rotation (105) destiné à soumettre les coordonnées de points à une rotation (705) de l'angle d'orientation de grille ;
un moyen de détermination d'espacement de grille (105) destiné à déterminer (707) l'espacement de grille à partir des coordonnées de points soumises à rotation en :

déterminant (1002, 1003) des vecteurs de différence d'au moins un point parmi les points à un autre point le plus proche parmi les points, et
en déterminant (1004, 1005) l'espacement de grille à partir de valeurs d'une ordonnée x des vecteurs de différence ; et
un moyen de détermination de translation de grille (105) destiné à déterminer (709) la translation de grille pour chacun des points en utilisant les coordonnées de points soumises à rotation et l'espacement de grille :

pour chacun desdits points, en déterminant (1303) chaque point qui se trouve à l'intérieur d'une fenêtre locale du point courant,

en normalisant (1305) les coordonnées de chaque point $(x_k, y_k)$ à l'intérieur de la fenêtre locale à $(xNew_k, yNew_k)$ afin que l'espacement de grille devienne égal à $2\pi$, et

en estimant (1307) un degré de déphasage du point courant par rapport à un point de grille correspondant au point courant en :

déterminant des phaseurs de décalage x et y (xOffset, yoffset) pour le point courant sous la forme d'une somme de phaseurs x et y de chaque point dans la fenêtre locale en utilisant respectivement les coordonnées normalisées, les phaseurs x et y étant respectivement calculés sous la forme $\cos(xNew_k) + j\sin(xNew_k)$ et $\cos(yNew_k) + j\sin(yNew_k)$,

en déterminant un phaseur de décalage x, $xOffset_2$, pour le point courant sous la forme d'un produit dudit phaseur de décalage x, xOffset, et du conjugué du phaseur x du point courant normalisé,

en déterminant un phaseur de décalage y, $yOffset_2$, pour le point courant sous la forme du produit dudit phaseur de décalage y, yoffset, et du conjugué du phaseur y du point courant normalisé, et

en déterminant (1309) une position pour le point de grille, (xGrid, yGrid), correspondant au point courant $(x_c, y_c)$ en utilisant les phaseurs de décalage x et y $(xOffset_2, yOffset_2)$.

8. Appareil selon la revendication 7, dans lequel :

$$xOffset_2 = xOffset \left( \cos\left( \frac{-2x_c \pi}{espacement\ de\ grille} \right) + j\sin\left( \frac{-2y_c \pi}{espacement\ de\ grille} \right) \right)$$

$$yOffset_2 = yOffset \left( \cos\left( \frac{-2x_c \pi}{espacement\ de\ grille} \right) + j\sin\left( \frac{-2y_c \pi}{espacement\ de\ grille} \right) \right)$$

et dans lequel $x_c$ et $y_c$ sont les coordonnées soumises à rotation du point courant.

9. Appareil selon la revendication 7, dans lequel le moyen de détermination d'angle d'orientation de grille destiné à déterminer (904-906) l'angle d'orientation de grille à partir des vecteurs de déplacement est configuré pour:

déterminer (905) des valeurs de variables A et B sous la forme :

$$A = \sum_i \cos(4\theta_i)$$

$$B = \sum_i \sin(4\theta_i)$$

où $\theta_i$ sont les angles des vecteurs de déplacement et les sommes sont prises sur la totalité des vecteurs de déplacement ; et

déterminer (906) l'angle d'orientation de grille sous la forme :

$$\varphi = 1/4\ atan2(B,A).$$

10. Appareil selon la revendication 7, dans lequel le moyen de détermination d'angle d'orientation de grille destiné à déterminer (904-906) l'angle d'orientation de grille à partir des vecteurs de déplacement est configuré pour:

déterminer un histogramme des angles des vecteurs de déplacement ; et

déterminer une classe d'histogramme contenant le plus grand nombre d'angles de vecteurs de déplacement en tant qu'angle d'orientation de grille.

11. Appareil selon la revendication 7, dans lequel le moyen de détermination d'espacement de grille destiné à déterminer (707) l'espacement de grille à partir des coordonnées de points soumises à rotation est configuré pour :

générer (1004) un histogramme de l'ordonnée x de chaque vecteur de différence ; et
déterminer (1005) une valeur x de l'ordonnée x la plus fréquente en tant qu'espacement de grille.

12. Appareil selon la revendication 7, dans lequel le moyen de détermination d'espacement de grille destiné à déterminer (707) l'espacement de grille à partir de coordonnées de points soumises à rotation est configuré pour:

déterminer l'espacement de grille en tant que moyenne des ordonnées x des vecteurs de différence.

13. Produit de programme informatique comprenant un programme destiné à un dispositif de traitement, comprenant des parties d'un code logiciel destinées à mettre en oeuvre les étapes de l'une quelconque des revendications 1 à 6 lorsque le programme est exécuté sur le dispositif de traitement.

14. Produit de programme informatique selon la revendication 13, dans lequel le produit de programme informatique comprend un support lisible par ordinateur sur lequel sont stockées des parties d'un code logiciel.

EP 1 762 961 B1

Fig. 1

20

Fig. 2

Fig. 3

Fig. 4

Fig. 5

Fig. 6

# Fig. 7

700

```
          ┌─────────┐
          │  Start  │
          └────┬────┘
               │
               ▼
      ┌──────────────────┐
      │ Determine grid   │  703
      │   orientation    │
      └────────┬─────────┘
               │
               ▼
      ┌──────────────────┐
      │  Rotate dot      │  705
      │  coordinates     │
      └────────┬─────────┘
               │
               ▼
      ┌──────────────────┐
      │ Determine grid   │  707
      │    spacing       │
      └────────┬─────────┘
               │
               ▼
      ┌──────────────────┐
      │ Determine grid   │  709
      │   translation    │
      └────────┬─────────┘
               │
               ▼
          ┌─────────┐
          │ Finish  │
          └─────────┘
```

# Fig. 8

800

803

805

```
         ┌──────────┐
         │  Start   │
         └────┬─────┘
              │
              ▼
   ┌──────────────────────┐
   │  Determine grid      │
   │  orientation,        │
   │  rotate dots,        │
   │  detect grid         │
   │  spacing,            │
   │  detect grid         │
   │  translation         │
   └──────────┬───────────┘
              │
              ▼
   ┌──────────────────────┐
   │   Determine          │
   │   modulation         │
   │   quantum            │
   └──────────┬───────────┘
              │
              ▼
         ┌──────────┐
         │  Finish  │
         └──────────┘
```

# Fig. 9

900

```
        ┌─────────┐
        │  Start  │
        └────┬────┘
             │
             ▼
     ┌───────────────┐
     │  Determine    │  902
     │  closest dots │
     └───────┬───────┘
             │
             ▼
     ┌───────────────┐
     │  Determine    │  903
     │  displacement │
     │    vectors    │
     └───────┬───────┘
             │
             ▼
     ┌───────────────────┐
     │Determine angles for│  904
     │ each displacement  │
     │      vector        │
     └─────────┬─────────┘
               │
               ▼
     ┌───────────────────┐
     │ Determine A and B │  905
     └─────────┬─────────┘
               │
               ▼
     ┌───────────────────┐
     │    Determine      │  906
     │ orientation angle │
     └─────────┬─────────┘
               │
               ▼
          ┌─────────┐
          │   End   │
          └─────────┘
```

# Fig. 10

```
                    ┌──────────────┐
                    │    Start     │
                    └──────┬───────┘
                           │
                           ▼
   1000           ┌──────────────────┐   1002
                  │ Determine closest│
                  │ right  dot       │
                  └────────┬─────────┘
                           │
                           ▼
                  ┌──────────────────┐   1003
                  │Determine nearest │
                  │right dot vectors │
                  └────────┬─────────┘
                           │
                           ▼
                  ┌──────────────────┐   1004
                  │ Generate X-value │
                  │ histogram        │
                  └────────┬─────────┘
                           │
                           ▼
                  ┌──────────────────┐   1005
                  │ Determine grid   │
                  │ spacing          │
                  └────────┬─────────┘
                           │
                           ▼
                    ┌──────────────┐
                    │     End      │
                    └──────────────┘
```

# Fig. 11

Fig. 12

# Fig. 13

1300

Start — 1303

Determine dots inside local window of current dot

Normalize dot coordinates — 1305

Determine x and y offset phasors — 1307

Determine grid-point location — 1309

More dots to process? — 1311

Y

N

End

## Fig. 14

# Fig. 15

1500

```
        ┌─────────────┐
        │    Start     │
        └──────┬──────┘
               │
               ▼
        ┌─────────────────┐
        │Determine closest│    1502
        │   right dot     │
        └────────┬────────┘
                 │
                 ▼
        ┌─────────────────┐
        │Determine nearest│    1503
        │ right dot vectors│
        └────────┬────────┘
                 │
                 ▼
        ┌─────────────────┐
        │Determine  Y-value│   1504
        │   histogram     │
        └────────┬────────┘
                 │
                 ▼
        ┌─────────────────┐
        │Determine modulation│  1505
        │    quantum      │
        └────────┬────────┘
                 │
                 ▼
        ┌─────────────┐
        │     End      │
        └─────────────┘
```

# Fig. 16

1600

1601

1603

1602

# Fig. 17

1700

```
        ┌─────────────┐
        │    Start     │
        └──────┬──────┘
               │
               ▼
     ┌──────────────────┐        1702
     │  Determine grid   │
     │   translations    │
     └─────────┬────────┘
               │
               ▼                  1703
     ┌──────────────────┐
     │ Determine offset  │
     │     vectors       │
     └─────────┬────────┘
               │
               ▼                  1704
     ┌──────────────────┐
     │ Determine y-offset│
     │     histogram     │
     └─────────┬────────┘
               │
               ▼                  1705
     ┌──────────────────┐
     │ Determine largest │
     │ peaks of histogram│
     └─────────┬────────┘
               │
               ▼                  1706
     ┌──────────────────┐
     │Determine modulation│
     │     quantum        │
     └─────────┬────────┘
               │
               ▼
        ┌─────────────┐
        │    Start     │
        └─────────────┘
```